# EUROPÄISCHE PATENTSCHRIFT

(11) **EP 0 769 181 B1**
(45) Veröffentlichungstag und Bekanntmachung des Hinweises auf die Patenterteilung: **04.10.2006**
(21) Anmeldenummer: 96910905.7
(22) Anmeldetag: 20.04.1996
(51) Int. Cl.: G08G 1/0968

(54) **EINRICHTUNG ZUR INFORMATION EINES FAHRZEUGFÜHRERS**
DEVICE FOR PROVIDING A VEHICLE DRIVER WITH INFORMATION
DISPOSITIF PERMETTANT DE FOURNIR DES INFORMATIONS AU CONDUCTEUR D'UN VEHICULE

(30) Priorität: 05.05.1995 DE 19516476
(43) Veröffentlichungstag der Anmeldung: 23.04.1997
(60) Teilanmeldung: 04021777.0
(73) Patentinhaber: ROBERT BOSCH GMBH, 70442 Stuttgart (DE)
(72) Erfinder: GOSS, Stefan, D-31137 Hildesheim (DE); KELL, Dietmar, D-31199 Diekholzen (DE)
(86) Internationale Anmeldenummer: PCT/DE1996/000698
(87) Internationale Veröffentlichungsnummer: WO 1996/035199

(56) Entgegenhaltungen:
- EP-A- 0 564 353
- PHILIPS JOURNAL OF RESEARCH, Bd. 48, Nr. 4, 1.Januar 1994, Seiten 299-313, XP000495036 BIESTERBOS J W M ET AL: "SOCRATES: A DYNAMIC CAR NAVIGATION, DRIVER INFORMATION AND FLEET MANAGEMENT SYSTEM"

## Beschreibung

Die Erfindung betrifft eine Einrichtung zur Information eines Fahrzeugführers.

Mit dem Radio-Daten-System (RDS) wird eine zusätzliche und unhörbare Übermittlung von digitalen Daten parallel zu Rundfunkprogrammen in einem Datenkanal ermöglicht. Spezifikationen des Radio-Daten-Systems für UKW-Hörfunk sind unter anderem in der Druckschrift Tech. 3244 - E, März 1984 der europäischen Rundfunk-Union (EBU) festgelegt. Rundfunkempfänger mit geeigneten RDS-Decodern können übermittelte Daten zusätzlich zum Rundfunkempfang mit dem selben Empfangsteil aufnehmen und decodieren. Die Datenübertragung erfolgt in 32 Gruppen zu jeweils 108 Bit, wobei jeder Gruppe ein bestimmter Dienst zugewiesen wird. Die Gruppe 8a ist zur Übertragung von digital codierten Verkehrsmeldungen vorgesehen.

Der Aufbau und die Codierung dieser Verkehrsmeldungen sind in dem Normvorschlag ALERT C, November 1990, herausgegeben vom RDS ATT ALERT Consortium, im einzelnen festgelegt. Die wesentlichen Elemente einer Verkehrsmeldung sind dabei der Ort des Geschehens (Location) und das Ereignis (Event). Diese Angaben sind katalogisiert, das heißt, daß jedem verkehrsrelevanten Ort und jedem verkehrsrelevanten Ereignis ein eindeutiger Code zugewiesen ist. Die Verkettung der Orte in der Ortstabelle entlang existierender straßen gibt den Verlauf wieder. Außer den üblichen Einrichtungen eines Empfangsgerätes mit einem RDS-Decoder sind zur Nutzung des Verkehrsmeldungskanals TMC (Traffic Message Channel) Einrichtungen zur Decodierung, zur Speicherung, zur Weiterverarbeitung und zur Ausgabe der Verkehrsmeldungen erforderlich - im folgenden auch TMC-Empfänger genannt.

Ferner sind Navigationssysteme bekanntgeworden, bei denen die jeweilige Position des Fahrzeugs ermittelt wird und mit Hilfe einer digital gespeicherten Straßenkarte nach Eingabe eines Fahrtziels Routenvorschläge berechnet und angezeigt werden. Zur Positionsbestimmung können dabei Sensoren verwendet werden, welche die Bewegung des Fahrzeugs auf der Fahrbahn erfassen, sowie Satelliten-Ortungssysteme (GPS). Die berechneten Routenvorschläge können als Landkarten mit markierter vorgeschlagener Route oder als Anweisung zum Verhalten an Kreuzungen und Abzweigungen ausgegeben werden. So sind beispielsweise Navigationssysteme bekannt, bei welchen ein verschiedene Formen und Richtungen annehmendes Pfeilsymbol dem Fahrzeugführer den Weg weist. Bei den bekannten Navigationssystemen werden die Routenempfehlungen und gegebenenfalls andere Informationen jedoch lediglich aufgrund der digital gespeicherten Straßenkarte ermittelt, ohne daß Veränderungen des Straßennetzes, insbesondere temporäre Veränderungen durch Staus oder Sperrungen, berücksichtigt werden.

Philips Journal of Research, Vol. 48, Nr. 4, 1995, S. 299 - 313, Biesterbos et al.: "Socrates: A dynamic car navigation, driver information and fleet management system" offenbart ein System zur Information von Fahrzeugführern, umfassend ein Navigationssystem, das auf Grundlage von Straßenkartendaten eine Fahrroute berechnet, ferner umfassend ein Mobiltelefon zum Empfang von Verkehrsmeldungen, wobei das Mobiltelefon mit dem Navigationssystem zur Übermittlung empfangener Verkehremeldungen verbunden ist, so dass das Navigationssystem eine sogenannte dynamisierte Routenführung unter Berücksichtigung der Verkehrsmeldungen ausführt. Navigationssystem und Mobiltelefon sind dabei als baulich getrennte Einheiten ausgebildet.

IEEE 1994 Vehicle Navigation & Information Systems Conference Proceedings, S. 543-546, F. Zijderhand, J.W.M. Biesterbos : "Functions and Applications of Socrates" beschreibt ebenfalls das oben genannte Socrates-System.

Die erfindungsgemäße Einrichtung zeichnet sich demgegenüber aus, dadurch daß ein Decoder für digital codierte Verkehrsmeldungen und ein Navigationssystem, das zur Ermittlung der jeweiligen Position des Fahrzeugs und zur Berechnung von Routenempfehlungen ausgelegt ist, eine bauliche Einheit bilden.

Die erfindungsgemäße Einrichtung weist den Vorteil auf, daß durch Bildung einer baulichen Einheit verschiedene Komponenten sowohl für die Decodierung und Verwaltung von Verkehrsmeldungen als auch für das Navigationssystem benutzt werden können. Dadurch tritt außer einem wirtschaftlichen Vorteil auch eine Qualitätsverbesserung, beispielsweise durch eine schnellere Signalverarbeitung, auf.

Bei der Berechnung und Anzeige von Routenvorschlägen werden digital codierte Verkehrsmeldungen berücksichtigt. Außerdem trägt die erfindungsgemäße Einrichtung dazu bei, daß dem Fahrzeugführer nicht unnötig viele Verkehrsmeldungen angezeigt oder akustisch dargeboten werden, die für seine voraussichtliche Route nicht relevant sind, wenn bei einer Selektion von auszugebenden Verkehrsmeldungen die jeweilige Position des Fahrzeugs, ein eingegebenes Ziel und Routenvorschläge berücksichtigt werden.

Das Zusammenwirken des Navigationssystems und der Decodierung und Ausgabe von Verkehrsmeldungen führt zusätzlich zu den durch beide Systeme bekannten Vorteilen sowohl zu einer Verbesserung der Ausgabe von Verkehrsmeldungen als auch zu einer Verbesserung der von dem Navigationssystem abgegebenen Fahrhinweise.

Die Verbesserung der Ausgabe von Verkehrsmeldungen besteht vor allem darin, daß durch die Kenntnis der jeweils vom Navigationssystem ermittelten Position des Fahrzeugs und des vom Benutzer eingegebenen Ziels eine besonders günstige Selektion der auszugebenden Verkehrsmeldungen aus den insgesamt empfangenen möglich ist. So ist es beispielsweise in den meisten Betriebsfällen für den Fahrzeugführer sinnvoll, nur die Verkehrsmeldungen zu erhalten, die sich auf seine voraussichtliche Route bzw. auf alternative Routen beziehen. Die Fahr- bzw. Routenempfehlungen werden bei der erfindungsgemäßen Einrichtung dadurch verbessert, daß die Routenempfehlungen unter Berücksichtigung der empfangenen und decodierten Verkehrsmeldungen berechnet werden. Insbesondere ist es dabei möglich, Verkehrsmeldungen, welche sich auf Staus oder zähflüssigen Verkehr beziehen, in verkehrliche Widerstandswerte umzurechnen, die dann für verschiedene alternative Routen verglichen werden.

Obwohl die Vereinigung mit einem Rundfunkempfänger zu einer Baueinheit im Rahmen der Erfindung nicht ausgeschlossen wird, ist bei einer bevorzugten Ausführungsform vorgesehen, daß die digital codierten Verkehrsmeldungen von einem Rundfunkempfänger zuführbar sind.

Die erfindungsgemäße Einrichtung zeichnet sich weiter dadurch aus, daß eine digital codierte Straßenkarte und zur Decodierung und Ausgabe an den Benutzer der Verkehrsmeldungen erforderliche Informationen auf demselben Datenträger abgelegt sind. Diese Speichereinrichtung ist vorzugsweise eine Compact-Disc. (CD-ROM), die wegen ihrer hohen Speicherkapazität.von beispielsweise 640 MByte außer der für die digital codierte Straßenkarte erforderlichen Datenmenge noch wesentlich mehr Daten speichern kann als die für TMC-Empfänger vorgesehene Chipkarte.

Die erfindungsgemäße Einrichtung ist deshalb vorzugsweise derart ausgebildet, daß die zur Decodierung und Ausgabe der Verkehrsmeldungen erforderlichen Informationen in einer Ortsliste abgelegt sind, welche jeweils in codierter Form ausgewählte Orte, zu den ausgewählten Orten jeweils benachbarte Orte, zu den ausgewählten Orten gehörende Streckenabschnitte und Namen der ausgewählten Orte enthalten.

Dabei kann die Form der Ortsnamen in codierten Schriftzeichen, beispielsweise ASCII-Codes, und/oder in Lautschrift-Codes bestehen. Ferner können die Ortsnamen in mehreren Sprachen abgelegt sein, sofern Ortsnamen in mehreren Sprachen für den jeweiligen Ort üblich sind. Schließlich kann auch die Lautschrift der Ortsnamen mehrfach abgelegt sein, um eine Anpassung des Ortsnamens an den übrigen Teil einer Verkehrsmeldung zu ermöglichen.

Die für TMC-Empfänger vorgesehene Ortsliste weist aufgrund ihrer Zweckbestimmung, nämlich zur Decodierung und Ausgabe von Verkehrsmeldungen, eine recht unterschiedliche Struktur gegenüber einer digitalen Straßenkarte auf. Insbesondere zeichnen sich Ortslisten gemäß ALERT C dadurch aus, daß die Orte punktorientiert beschrieben werden und daß das Datenaufkommen je Ort wegen des für TMC-Empfänger vorgesehenen Datenträgers relativ klein ist. Außerdem sieht das TMC-System verschiedene Ortslisten vor. Bei einem Zusammenwirken eines TMC-Empfängers (einschließlich Decoder) und eines Navigationssystems mit je einem Datenträger für die Ortsliste und für die digital codierte Straßenkarte ist daher ein Datenabgleich zwischen Ortsliste und Straßenkarte erforderlich. Daher ist bei mangelnder Übereinstimmung, die unter anderem auch durch verschiedene Änderungsstände der Datenträger verursacht sein kann, ein Zusammenwirken zwischen TMC-Empfänger und Navigationssystem beeinträchtigt oder sogar unmöglich.

Die Verwendung desselben Datenträgers ermöglicht jedoch, bei der Herstellung des Datenträgers aufeinander abgestimmte Daten aufzuzeichnen. Der Benutzer erhält dann zwangsläufig beim Erwerb eines neuen Datenträgers mit einer neuen Version der Straßenkarte die dazu passende Ortsliste zur Decodierung und Wiedergabe von Verkehrsmeldungen.

Wegen der begrenzten Kapazität der Chipkarte zur Speicherung von Ortsnamen ist bei den bisher bekannten TMC-Empfängern die Qualität der Sprachausgabe begrenzt. Dieser Nachteil besteht bei der erfindungsgemäßen Einrichtung nicht. Gemäß einer anderen Weiterbildung der erfindungsgemäßen Einrichtung ist daher vorgesehen, daß ein an sich im Zusammenhang mit einem Navigationssystem bekannter Sprachgenerator zur Ausgabe der Verkehrsmeldungen nutzbar ist. Dieser Sprachgenerator ist wegen des geringeren Wortschatzes des Navigationssystems von vornherein für eine höhere Qualität ausgelegt. Der Wortschatz zur Sprachausgabe wird dann mit dem für Navigationssysteme vorgesehenen Verfahren codiert, beispielsweise mit adaptiver differentieller Puls-Code-Modulation (ADPCM).

Eine andere Weiterbildung der Erfindung besteht darin, daß mit Hilfe eines Bildschirms die Ausgabe der Verkehrsmeldungen und der Routenempfehlungen des Navigationssystems erfolgt. Der Bildschirm kann dabei vorzugsweise durch eine Flüssigkristallanordnung gebildet werden. Außer der Ersparnis eines Bildschirms hat diese Weiterbildung den Vorteil, daß sich zur Aufnahme von Verkehrsmeldungen und Routenempfehlungen die Aufmerksamkeit des Fahrzeugsführers nur auf einen Bildschirm zu richten braucht.

Bei dieser Weiterbildung kann vorgesehen sein, daß die Verkehrsmeldungen in alpha-numerischer Darstellung und die Routenempfehlungen in graphischer Darstellung auf dem Bildschirm ausgegeben werden. Diese Form der Ausgabe, die gegebenenfalls zusätzlich zu einer Sprachausgabe erfolgen kann, ist insbesondere dann vorteilhaft, wenn die Routenempfehlungen in Form von Pfeilen oder anderen Anweisungen ausgegeben werden.

Erfolgt jedoch die Ausgabe von Routenempfehlungen als Wiedergabe der Straßenkarte, so ist es im Rahmen der Erfindung möglich, daß die Verkehrsmeldungen eingebettet in die Wiedergabe der Straßenkarte, vorzugsweise in Form von Symbolen, wiedergegeben werden.

Ausführungsbeispiele der Erfindung sind in der Zeichnung anhand mehrerer Figuren dargestellt und in der nachfolgenden Beschreibung näher erläutert. Es zeigt:
- Fig. 1: ein Blockschaltbild einer erfindungsgemäßen Einrichtung,
- Fig. 2: ein Beispiel für eine Darstellung auf dem Bildschirm und
- Fig. 3: eine schematische Darstellung des Speicherinhalts einer bei der erfindungsgemäßen Einrichtung vorgesehenen Compact-Disc.

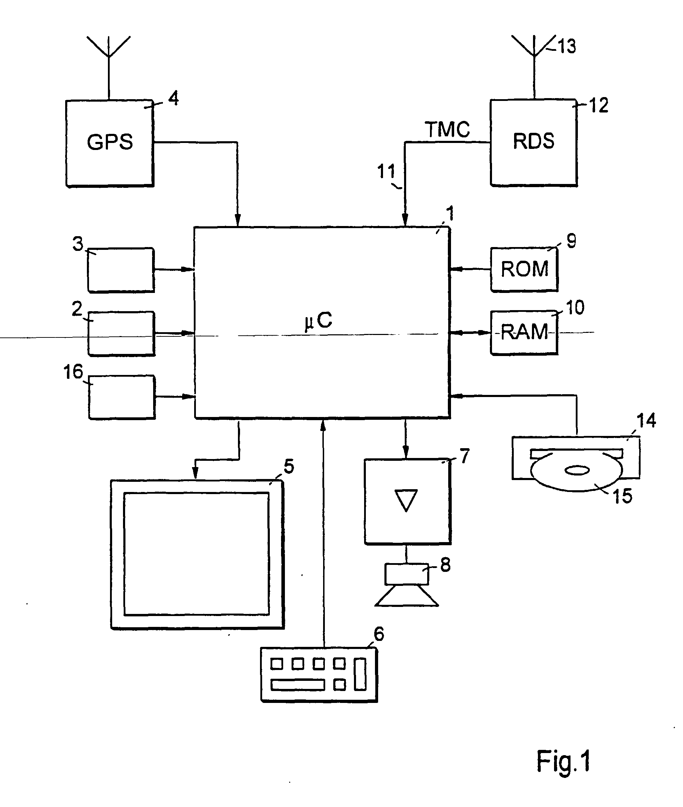

Bei dem in Fig. 1 dargestellten Ausführungsbeispiel werden sowohl die Funktionen des Navigationssystems als auch die Decodierung der Verkehrsmeldungen und die Steuerung der Ausgabe von einem Mikrocomputer 1 wahrgenommen. Dieser verfügt über eine genügend große Rechenleistung, um sämtliche Berechnungsabläufe für die Funktionen des Navigationssystems und der Decodierung und Ausgabe der Verkehrsmeldungen genügend schnell durchzuführen. An den Mikrocomputer 1 sind zu Zwecken der Navigation Radsensoren 2 zur Positions- und Fortbewegungsprüfung, ein digitaler Kompaß 3 ebenfalls zur Positions- und Fortbewegungsprüfung und ein GPS-Empfänger 4 zur Positionsermittlung angeschlossen.

Zur Ausgabe der Verkehrsmeldungen und der Routenempfehlungen dient ein graphikfähiger Bildschirm 5 - im folgenden auch Display genannt. Manuelle Eingaben können mit Hilfe einer Tastatur 6 vorgenommen werden. Zur akustischen Ausgabe von Fahrhinweisen und Verkehrsmeldungen sind ein Audioverstärker 7 und ein Lautsprecher 8 vorgesehen. In einem Lesespeicher 9 sind Programme für den Mikrocomputer 1 und Konstanten abgelegt. Für die Decodierung und Ausgabe von Verkehrsmeldungen umfassen diese Konstanten unter anderem eine Ereignis-Liste, welche Ereignis-Namen zu in den Verkehrsmeldungen enthaltenen Ereignis-Codes gegebenenfalls in mehreren Sprachen enthält. Außerdem sind in dem Lesespeicher 9 Trägersätze abgelegt, in welche je nach Inhalt der Verkehrsmeldung ein Ereignis-Name und Ortsnamen eingefügt werden. Für eine Sprachausgabe können die Ereignis-Namen und Trägersätze in Lautschrift abgelegt sein.

Ein Schreib/Lesespeicher 10 dient zur Zwischenspeicherung verschiedener Daten, beispielsweise von empfangenen Verkehrsmeldungen. Über eine geeignete Datenverbindung 11 ist der Mikrocomputer 1 an einen Rundfunkempfänger 12 angeschlossen, der über eine Antenne 13 digital codierte Verkehrsmeldungen empfängt und an den Mikrocomputer 1 weiterleitet.

Ein CD-ROM-Laufwerk 14 mit einem CD-ROM 15 dient zur Speicherung einer digital codierten Straßenkarte und den dazugehörigen ortsbezogenen Daten des TMC-Systems.

Die gesamte Einrichtung ist programmorientiert. Das bedeutet, daß Informationen jeder einzelnen Komponente zeitlich unkorreliert auftreten und dem Mikrocomputer 1 zugeführt werden können. Dieser ist in der Lage die Informationen genügend schnell aufzunehmen und im Schreib/Lesespeicher 10 zwischenzuspeichern.

Über die Tastatur 6 kann der Benutzer ein Ziel eingeben. Die Sensoren 2, 3, 4 liefern regelmäßig Informationen, auf deren Basis die jeweilige Position neu bestimmt und mit der digitalen Straßenkarte, die auf dem CD-ROM 15 abgespeichert ist, abgeglichen wird. Daraufhin kann eine Darstellung des entsprechenden Kartenausschnitts auf dem Display erfolgen und zusätzlich eine Fahrempfehlung bzw. Routenempfehlung zu dem eingegebenen Fahrtziel mittels Sprachausgabe über den Audioverstärker 7 und Lautsprecher 8 oder mittels einer Text- oder Pfeildarstellung über das Display 5 erfolgen. Beispielsweise durch den Text "übernächste Straße links abbiegen".

Die über die Antenne 13 empfangenen Rundfunksignale werden im Empfänger 12 demoduliert. Sofern in den Rundfunksignalen Datensignale enthalten sind, werden diese ebenfalls im Empfänger 12 extrahiert und decodiert. Die gegebenenfalls enthaltenen digital codierten Verkehrsmeldungen werden dann an den Mikrocomputer 1 in einem durch ALERT C genormten Format weitergeleitet und im Schreib/Lesespeicher 10 zwischengespeichert. Eine Decodierung gemäß ALERT C nimmt der Mikrocomputer 1 vor. Für Verkehrsmeldungen, die absolute Uhrzeiten beinhalten, ist ein Vergleich mit der aktuellen Uhrzeit erforderlich, die der Mikrocomputer 1 bei einer Uhr 16 abfragen kann.

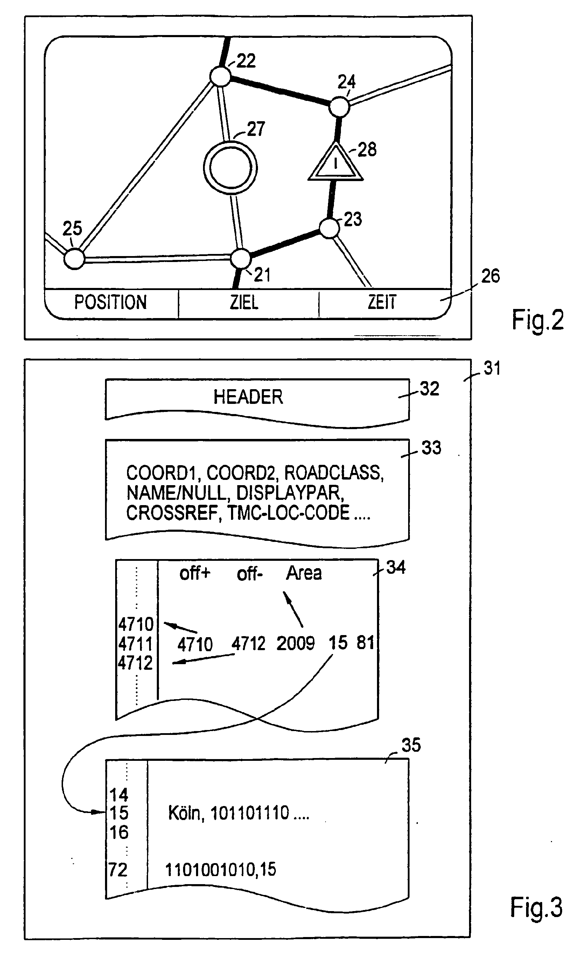

Fig. 2 zeigt ein Beispiel für eine Darstellung eines Ausschnitts aus einer Straßenkarte mit Orten 21, 22, 23, 24, 25 und mehreren Straßen. In einem unteren Teilbereich 26 wird alpha-numerisch die jeweilige Position, das eingegebene Ziel und die Uhrzeit dargestellt. Eine zunächst von dem Navigationssystem errechnete Routenempfehlung verläuft von unten über die Orte 21 und 22 nach oben. Dem dargestellten Zeitpunkt vorausgehend sind zwei Verkehrsmeldungen empfangen worden, nämlich eine Verkehrsmeldung, welche eine Vollsperrung zwischen den Orten 21 und 22 zum Gegenstand hat, während eine zweite Verkehrsmeldung eine (leichte) Behinderung zwischen den Orten 23 und 24 betrifft. Diese Verkehrsmeldungen werden als Symbole 27, 28 angezeigt, die in Anlehnung an bekannte Verkehrszeichen gestaltet sind.

Nach dem Eintreffen der Verkehrsmeldungen wurden im Mikrocomputer 1 alternative Routen berechnet und mit der direkten Verbindung zwischen den Orten 21 und 22 verglichen. Dabei hat sich herausgestellt, daß trotz der Behinderung zwischen den Orten 23 und 24 diese alternative Route günstiger als eine alternative Route über den Ort 25 ist. Deshalb wurde die alternative Route über die Orte 21, 23, 24, 22 durch Farbe und/oder Intensität hervorgehoben dargestellt.

Fig. 3 zeigt schematisch den wesentlichen Inhalt 31 des CD-ROMs 15 (Fig. 1). Ein Header 32 enthät allgemeine Angaben, um den Inhalt des CD-ROMs zu kennzeichnen, beispielsweise das Gebiet, auf welches sich die Straßenkarte und die Ortsliste beziehen, den Aktualisierungsstand und welche Ortslisten gemäß ALERT C auf dem CD-ROM gespeichert sind. In einer Datei 33 bzw. Gruppe von Dateien sind die Daten gespeichert, welche die Straßenkarte bilden.

Die Datei 33 enthält für jeweils einen Streckenabschnitt eine Anzahl von Daten, wovon nur einige im folgenden erläutert werden. Die Lage des Streckenabschnitts innerhalb der Straßenkarte wird durch die Koordinaten COORD1 und COORD2 der Endpunkte des Streckenabschnitts bestimmt. Ferner sind die Straßenart ROADCLASS sowie ein Name, falls dieser vorhanden ist, gespeichert. Verschiedene Darstellungsparameter DISPLAYPAR steuern die jeweilige Darstellung des Streckenabschnitts und gegebenenfalls des Namens auf dem Bildschirm. Darin sind beispielsweise Informationen enthalten, bei welchem Darstellungsmaßstab der jeweilige Streckenabschnitt gezeigt wird. So werden beispielsweise bei einem sehr kleinen Maßstab lediglich Autobahnen dargestellt, während bei einem sehr großen Maßstab beispielsweise auch innerörtliche Straßen abgebildet werden.

Die Datei 33 enthält ferner eine Kreuzreferenz CROSSREF zu anderen Straßen. Für die Auswertung von Verkehrsmeldungen bei der Berechnung von Routenempfehlungen ist der Orts-Code TMC-LOC-CODE des TMC-Systems von Bedeutung. Dabei werden den Streckenabschnitten die Orts-Codes des nächstliegenden Ortes des TMC-Systems zugeordnet. Besteht beispielsweise die Strecke zwischen den Orten 21 und 22 (Fig. 2) aus sechs Streckenabschnitten, erhalten die drei an den Ort 21 anschließenden dessen Orts-Code und die anderen den Orts-Code des Ortes 22.

Die Ortsliste ist bei dem in Fig. 3 dargestellten Ausführungsbeispiel in zwei Teile aufgeteilt, nämlich in einen Teil 34, der die zur Decodierung der Verkehrsmeldung erforderlichen Informationen enthält, und in einen Teil 35, der Informationen zur Sprachausgabe umfaßt. Diese Zweiteilung der Ortsliste hat den Vorteil, daß der erste Teil 34 eine konstante Stellenzahl je Orts-Code aufweist und daher in einfacher Weise von einem Programm zur Decodierung angesprochen werden kann.

In dem dargestellten Beispiel ist erkennbar, daß der Ort mit der Code-Nummer 4711 zu einem Gebiet 2009 gehört und daß die benachbarten Orte 4710 und 4712 sind. Außerdem sind in dem Teil 34 der Ortsliste Identifizierer enthalten, welche zum Auslesen der Ortsnamen und anderer Bezeichnungen aus dem Teil 35 der Liste dienen. So kann beispielsweise der Identifizierer 15 das Wort Köln und der Identifizierer 81 das Wort Nord bedeuten.

In dem dargestellten zweiten Teil 35 der Ortsliste ist bei dem Identifizierer 15 der Ortsname Köln in ASCII-Zeichen für eine geschriebene Ausgabe und als digitales ADPCM-Signal für eine Sprachausgabe abgelegt. Weitere ADPCM-Signale können für Ausgaben in anderen Sprachen folgen. Der Identifizierer 72 weist auf eine Anschlußstelle 15 hin, wobei das Wort Anschlußstelle ebenfalls als ADPCM-Signal dargestellt ist, während die Nummer 15 als Zahl abgelegt ist und von dem Programm zur Sprachsynthese in die gesprochene Zahl in der jeweiligen Sprache umgewandelt wird. Die Codes der benachbarten Orte werden bei der Decodierung benötigt, um ein gemäß ALERT C als Anzahl von Abständen zwischen benachbarten Orten übertragenes Ausmaß decodieren zu können.

## Patentansprüche

1. Einrichtung zur Information eines Fahrzeugführers, mit einem Navigationssystem, das zur Ermittlung der jeweiligen Position des Fahrzeugs und zur Berechnung von Routenempfehlungen ausgelegt ist, wobei die Routenempfehlungen unter Berücksichtigung von empfangenen und decodierten Verkehrsmeldungen berechnet werden **dadurch gekennzeichnet, dass** ein Decoder für digital codierte Verkehrsmeldungen und das Navigationssystem eine bauliche Einheit bilden und dass eine digitale codierte Straßenkarte und zur Decodierung und Ausgabe der Verkehrsmeldungen an den Benützer erforderliche Informationen auf demselben Datenträger abgelegt sind.

2. Einrichtung nach Anspruch 1, **dadurch gekennzeichnet, dass** die digital codierten Verkehrsmeldungen von einem Rundfunkempfänger zuführbar sind.

3. Einrichtung nach einem der vorhergehenden Ansprüche, **dadurch gekennzeichnet, dass** die zur Decodierung und Ausgabe der Verkehrsmeldungen erforderlichen Informationen in einer Ortsliste abgelegt sind, welche jeweils in codierter Form ausgewählte Orte, zu der ausgewählten Orten jeweils benachbarte Orter zu den ausgewählten Orten gehörende Streckenabschnitte und Namen der ausgewählten Orte enthält.

4. Einrichtung nach einem der vorhergehenden Ansprüche, **dadurch gekennzeichnet, dass** ein an sich im Zusammenhang mit einem Navigationssystem bekannter Sprachgenerator zur Ausgabe der Verkehrsmeldungen nutzbar ist.

5. Einrichtung nach einem der vorhergehenden Ansprüche, **dadurch gekennzeichnet, dass** mit Hilfe eines Bildschirms die Ausgabe der Verkehrsmeldungen und der Routenempfehlungen des Navigationssystems erfolgt.

6. Einrichtung nach Anspruch 5, **dadurch gekennzeichnet, dass** die Verkehrsmeldungen in alpha-numerischer Darstellung und die Routenempfehlungen in graphischer Darstellung auf dem Bildschirm ausgegeben werden.

7. Einrichtung nach Anspruch 5, **dadurch gekennzeichnet, dass** die Verkehrsmeldungen eingebettet in die Wiedergabe der Straßenkarte, vorzugsweise in Form von Symbolen, wiedergegeben werden.

8. Einrichtung nach einem der vorhergehenden Ansprüche, **dadurch gekennzeichnet, dass** bei einer Selektion von auszugebenden Verkehrsmeldungen die jeweilige Position des Fahrzeugs, ein eingegebenes Ziel und Routenvorschläge berücksichtigt werden.

## Claims

1. Device for informing a vehicle driver, having a navigation system which is designed to ascertain the respective position of the vehicle and to calculate route recommendations, with the route recommendations being calculated taking into account received and decoded traffic announcements, **characterized in that** a decoder for digitally coded traffic announcements and the navigation system form a physical unit, and **in that** a digital coded road map and information which is required for decoding and outputting the traffic announcements to the user are stored on the same data storage medium.

2. Device according to Claim 1, **characterized in that** the digitally coded traffic announcements can be supplied by a broadcast radio receiver.

3. Device according to one of the preceding claims, **characterized in that** the information which is required for decoding and outputting the traffic announcements is stored in a location list which contains, in each case in coded form, selected locations, respectively neighbouring locations for the selected locations, route sections associated with the selected locations and names for the selected locations.

4. Device according to one of the preceding claims, **characterized in that** a voice generator which is known per se in connection with a navigation system can be used to output the traffic announcements.

5. Device according to one of the preceding claims, **characterized in that** a screen is used to output the traffic announcements and the route recommendations of the navigation system.

6. Device according to Claim 5, **characterized in that** the traffic announcements are output in alphanumeric format and the route recommendations are output in graphical format on the screen.

7. Device according to Claim 5, **characterized in that** the traffic announcements are reproduced so as to be embedded in the reproduction of the road map, preferably in the form of symbols.

8. Device according to one of the preceding claims, **characterized in that** when selecting traffic announcements which are to be output the respective position of the vehicle, a destination which has been input and route proposals are taken into account.

## Revendications

1. Dispositif d'informations au conducteur d'un véhicule, comprenant un système de navigation servant à déterminer la position respective du véhicule et à calculer des recommandations d'itinéraires en tenant compte des annonces de trafic décodées reçues,
**caractérisé en ce qu'**
un décodeur annonces de trafic codées numériquement et le système de navigation forment une unité constructive, et le même support de données comporte une carte routière codée numériquement et des informations nécessaires pour le décodage et la délivrance des annonces de trafic à l'utilisateur.

2. Dispositif selon la revendication 1,
**caractérisé en ce que**
les annonces de trafic codées numériquement peuvent être acheminées par un récepteur radio.

3. Dispositif selon l'une des revendications précédentes,
**caractérisé en ce que**
les informations nécessaires au décodage et à la délivrance des annonces de trafic sont enregistrées dans une liste de lieux et contiennent à chaque fois sous forme codée des lieux sélectionnés, des lieux voisins par rapport aux lieux sélectionnés, des tronçons de voie appartenant aux lieux sélectionnés et des noms des lieux sélectionnés.

4. Dispositif selon l'une des revendications précédentes,
**caractérisé en ce qu'**
un générateur vocal connu en soi en liaison avec un système de navigation peut être utilisé pour générer les annonces de trafic.

5. Dispositif selon l'une des revendications précédentes,
**caractérisé en ce que**
la délivrance des annonces de trafic et des recommandations d'itinéraires du système de navigation s'effectue à l'aide d'un écran de visualisation.

6. Dispositif selon la revendication 5,
**caractérisé en ce que**
les annonces de trafic sont générées sur l'écran de visualisation dans une représentation alphanumérique et les recommandations d'itinéraires dans une représentation graphique.

7. Dispositif selon la revendication 5,
**caractérisé en ce que**
les annonces de trafic sont reproduites incluses dans la reproduction de la carte routière, de préférence sous forme de symboles.

8. Dispositif selon l'une des revendications précédentes,
**caractérisé en ce que**
lors d'une sélection d'annonces de trafic à générer, on prend en compte la position respective du véhicule, une cible indiquée et des propositions d'itinéraires.
